# EUROPÄISCHE PATENTSCHRIFT

(11) **EP 0 910 518 B1**
(45) Veröffentlichungstag und Bekanntmachung des Hinweises auf die Patenterteilung: **07.03.2001**
(21) Anmeldenummer: 97933654.2
(22) Anmeldetag: 07.07.1997
(51) Int. Cl.: B60Q 1/14

(54) **MODULARES LENKSTOCKSCHALTERSYSTEM**
MODULAR STEERING COLUMN MOUNTED SWITCH SYSTEM
SYSTEME MODULAIRE COMMUTATEUR DE COLONNE DE DIRECTION

(30) Priorität: 10.07.1996 DE 19627767
(43) Veröffentlichungstag der Anmeldung: 28.04.1999
(73) Patentinhaber: Valeo Schalter und Sensoren GmbH, 74321 Bietigheim-Bissingen (DE)
(72) Erfinder: HECHT, Walter, D-74321 Bietigheim-Bissingen (DE); KLEIN, Rudolf, D-74348 Lauffen (DE)
(74) Vertreter: Dreiss, Fuhlendorf, Steimle & Becker
(86) Internationale Anmeldenummer: EP9703565
(87) Internationale Veröffentlichungsnummer: WO9801318

(56) Entgegenhaltungen:
- EP-A- 0 366 628
- EP-A- 0 645 280
- EP-A- 0 688 032
- DE-A- 3 426 949
- DE-C- 4 427 883
- US-A- 5 281 779

## Beschreibung

Die Erfindung bezieht sich auf ein modulares Lenkstockschaltersystem für Kraftfahrzeuge gemäß dem Oberbegriff des Anspruchs 1.

Derartige modulare Lenkstockschalter sind beispielsweise aus der DE-A-28 10 790, DE-C1-44 27 883 oder WO-A-95 13 936 bekannt. Diese Lenkstockschalter, bei denen eine modulare Bauweise angewandt wird, beschränken sich auf die montagetechnischen Erfordernisse bei ihrem Zusammenbau oder einem Einbau in ein Fahrzeug oder auf eine Modularität der von den Schaltern auszuführenden externen Funktionen, wie die Betätigung der Lichtanlagen oder der Wischer-Waschanlagen. Die Aufteilung der internen Funktionen der Module wie externe mechanische Signalaufnahme, interne mechanische Signalverarbeitung, mechanische Schaltung von elektrischen Schaltern, das elektrische Schalten und Führen von Last- und Steuerströmen wird nicht berücksichtigt. Die oben genannten internen Funktionen der Baueinheiten sind in einem Modul integriert. Die dazugehörenden elektrischen Baugruppen zum Schalten und Führen von Last- und Steuerströmen, die Schalter und mechanischen Bauelemente zum externen betätigen der Schalterfunktionen und die Stomanschlüsse zu den externen, zu steuernden Baueinheiten wie Lampen, Blinker, Signalhorn u.s.w. sind weitestgehend in einem Modul zusammengefaßt. Die Nachteile dieser bekannten Lenkstockschalter sind zum Einen, daß bei Ausfall einer inneren Funktion das gesammte Modul defekt ist und ausgetauscht werden muß, zum Anderen einer individuelle Anpassung des Systems an den Funktionsbedarf und die Designanforderungen bestimmter Kraftfahrzeuge, nicht durch die nur betroffenen Bauteile und Baugruppen Rechnung getragen werden kann, sondern das gesammte Modul entsprechend neugestaltet werden muß. Diese Tatsache verhindert die Anwendung von Baukastensystemen, die die Wartung und Instandsetzung durch Tausch nur defekter Teile und die Fertigung durch Entstehen hoher Stückzahlen, gravierend verbilligt.

Aufgabe der vorliegenden Erfindung ist es, einen Lenkstockschalter der eingangs beschriebenen Art aufzubauen, dessen Module je nach Funktions- und Designerfordernissen gestaltet, eingesetzt und bei Defekt ausgetauscht werden können.

Die Aufgabe wird erfindungsgemäß mit einem Lenkstockschalter gelöst, der die Merkmale des Anspruchs 1 aufweist.

Das Prinzip der Erfindung besteht in einem nach den inneren Funktionen modular aufgebauten des Lenkstockschalter. Die inneren Funktionen des Schalters sind zum Beispiel
- das Aufnehmen von Funktionsbaugruppen und Befestigen an der Lenksäule,
- die mechanische, externe Signalaufnahme und Verarbeitung und
- die elektrische, interne Signalschaltung und Signalführung.

Dieser Aufbau ermöglicht es die in der Aufgabe geforderte Flexibilität der Funktionsgruppenkombination zu erreichen.

Mit anderen Worten wird durch die Erfindung folgendes erreicht:

Unterschiedliche im Lenkstockschalter auftretende Funktionen werden konsequent einzelnen Modulen zugeordnet, die voneinander lösbar den gesamten Schalter bilden. So können beispielsweise ein oder mehrere Module vorgesehen sein, die ausschließlich mechanische Funktionen aufweisen, welche die manuelle Betätigung durch den Fahrer wie das Verschwenken oder Drehen am Lenkstock in entsprechende mechanische Bewegungen eines Schaltgliedes umsetzen, die auf zumindest ein anderes Modul einwirken, welches ausschließlich oder fast ausschließlich nur elektrische Verbindungsfunktionen und ggf. auch elektrische Verstärkungs- und Siebfunktionen übernimmt. Es gibt also eine deutliche Grenze zwischen den mechanischen und den elektrischen Operationen, die gleichzeitig eine Schnittstelle für die entsprechenden Module bildet. Weiterhin kann ein Modul vorgesehen sein, welches ausschließlich dazu dient, weitere Module in einfacher Weise am Lenkstock zu verankern, so daß dieses Modul zum Aufnehmen von Funktionsbaugruppen und deren Befestigung an der Lenksäule dient. Ein weiteres zusätzliches Modul kann eine Meßfunktion beispielsweise des Drehwinkels des Lenkrads und damit des Lenkstocks gegenüber der Aufnahmehülse des Lenkstocks aufweisen, wobei der Lenkstockschalter an dieser Hülse ortsfest befestigt ist.

Werden Änderungen an einem Schalter vorgenommen, so richten diese sich in der Regel nur auf eine bestimmte Funktion. So kann beispielsweise der Wunsch bestehen, nur das äußere Design des den Schalthebel aufweisenden Moduls zu ändern oder an die räumlichen Bedingungen eines neuen Kraftfahrzeugtyps anzupassen. Es ist in diesem Falle also nur notwendig, die entsprechenden Module abzuwandeln, während das die elektrischen Schaltverbindungen aufweisende Modul in seinem Aufbau nicht geändert zu werden braucht. Im übrigen können auf dem die elektrischen Schaltkreise tragenden Modul bestimmte Vorleistungen erbracht werden, die neue Schaltfunktionen ermöglichen, wenn ein entsprechendes mechanisches Modul, das die Schaltbewegung durch den Fahrer in entsprechende Kontaktänderungen auf dem elektrischen Modul (Elektrikplatte) umsetzt, eingesetzt wird.

Umgekehrt kann es vorkommen, daß bestimmten mechanischen Bewegungen des Schalthebels neue elektrische Funktionen zugeordnet werden sollen. In diesem Falle ist nur der Austausch des elektrischen Moduls notwendig, während das bzw. die mechanischen Module unverändert bleiben können. Durch die Änderung des Befestigungsmoduls zur Befestigung der restlichen Module an der Lenkstockhülse ist es möglich, den Schalter an unterschiedliche Hülsen und damit unterschiedliche Fahrzeugtypen in einfacher Weise anzupassen, indem im übrigen der Schalter unverändert bleibt. Die Erfindung ist im übrigen besonders gut geeignet, den Schalter auf neue elektrische oder mechanische Forderungen anzupassen, da dann immer nur eines der entsprechenden Module ausgetauscht werden muß. Entsprechendes gilt, wenn neue technische Möglichkeiten realisiert werden sollen.

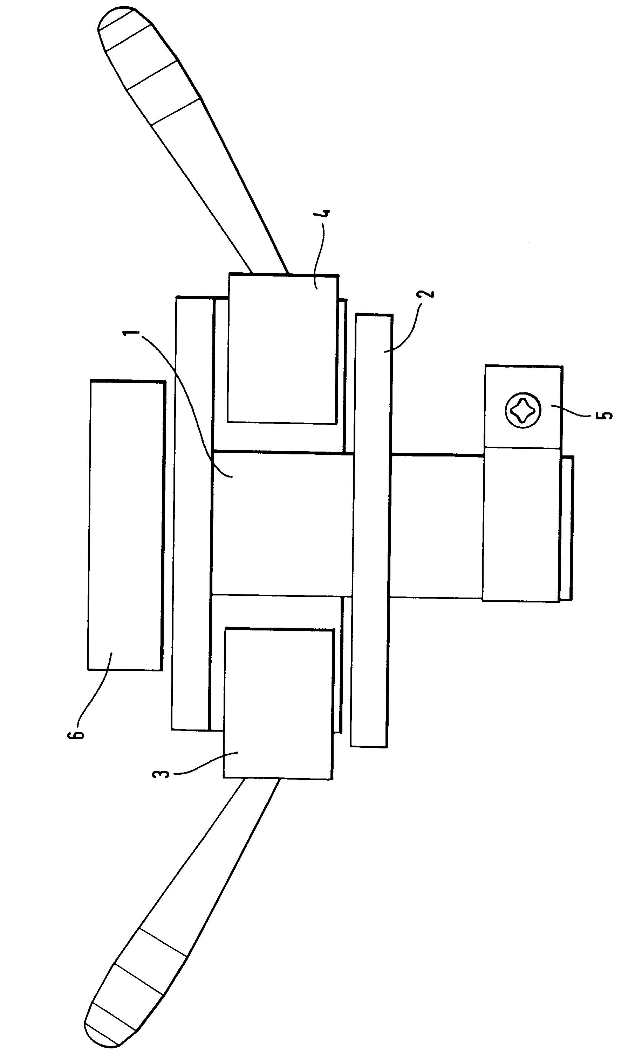

Ein Ausführungsbeispiel der Erfindung wird nachfolgend anhand der Zeichnung erläutert, die eine schematisierte Seitenansicht des aus sechs Modulen bestehenden modularen Lenkstockschalters zeigt.

Die Baueinheit besteht aus einem Aufnahmekörper 1 der die Schnittstellen zu einer externen Lenksäule und die internen Schnittstellen zu den Betätigungsmodulen 3, 4, zu einem Lenkwinkelsensor 6 und zu einer Elektrikplatte 2 definiert. Die Elektrikplatte 2 beinhaltet alle zur Stromschaltung, Stromverteilung, Stromführung und elektronischen Steuerung nötigen Baugruppen. Die Betätigungsmodule 3, 4 sind mechanisch aufgebaute Funktionsgruppen, die zur mechanischen Aufnahme externer Signale und Übertragung dieser an die Elektrikplatte 2 dienen. Eine Befestigungsschelle 5 dient zur Fixierung des modularen Lenkstockschalters an der Lenksäule eines Kraftfahrzeuges. Ein Lenkwinkelsensor 6 dient zum sensieren des am Fahrzeug eigeschlagen Lenkwinkels.

Sind in Fahrzeugen verschiedener Hersteller die gleichen technischen Funktionen des Lenkstockschalters aber unterschiedliches Design gefragt, so ermöglicht die Erfindung die Verwendung der gleichen Grundfunktionsträger, nämlich den Aufnahmekörper 1 und die Elektrikplatte 2 und den Austausch der das Design charakterisierenden Betätigungsmodule 3, 4.

Das Gleiche ist bei unterschiedlichen Funktionen der einzelnen Betätigungsmodule 3,4 oder des gesamten Lenkstockschalters möglich. Sind die Schnittstellen mechanischer und elektrischer Art definiert, können die entsprechenden einzelnen Funktionsmodule unabhängig von ihrer Funktion und ihrers inneren Konstruktionsaufbaus je nach Funktions und/oder Designbedürfnissen miteinander kombiniert werden.

Durch den modularen Aufbau des Gesamtsystems ist ebenfalls eine verbesserte Reparaturfähigkeit erreicht. Ist ein Funktionsmodul defekt, ist der Fehler durch Austausch des Moduls zu beheben ohne daß das Gesamtsystem Lenkstockschalter dadurch beeinträchtigt wird.

Sind durch steigende Komplexität des Funktionsbedarfs komplexere mechanische und elektrische Schnittstellen erforderlich, sind die Betätigungsmodule 3, 4 und die Elektrikplatte 2 mit den neuen, zueinander passenden Schnittstellen auszustatten und dann auszutauschen.

Ist eine Funktionserweiterung in Form eines Elektronikcontrollers für Busbetrieb, zum Steuern von elektronischen Zusatzfunktionen erforderlich, ist die Elektrikplatte 2 gegen eine mit Controller ausgestatteten Platte auszutauschen.

Zur Integration eines Lenkwinkelsensors 6 in den Lenkstockschalter ist der Aufnahmekörper 1 unter Beibehaltung der Schnittstellen für die Betätigungsmodule 3, 4 und der Elektrikplatte 2 zur Aufnahme des Sensors 6 zu modifizieren und der Sensor 6 zu integrieren. Alle anderen Module können dann unverändert verwendet werden.

## Patentansprüche

1. Modular aufgebauter Lenkstockschalter für Kraftfahrzeuge, mit wenigstens zwei Modulen (2, 3, 4) dadurch **gekennzeichnet,** daß
- das wenigstens eine Modul (3, 4) als Betätigungsmodul ausgebildet ist, in dem die internen mechanischen Funktionen des Lenkstockschalters, wie beispielsweise externe die Signalaufnahme, die Signalübertragung und die interne mechanische Schaltung der elektrischen Schaltkontakte, zusammengefasst sind, und
- das andere Modul (2) als Elektrikplatte ausgebildet ist, in dem die internen elektrischen Funktionen, wie die Stromschaltung, die Stromverteilung und die Stromführung, zusammengefasst sind,
wobei die Elektrikplatte (2) und die Betätigungsmodule (3, 4) als separate Baugruppen an einem Aufnahmekörper (1) befestigt oder in diesen integriert sind.

2. Lenkstockschalter nach Anspruch 1, dadurch gekennzeichnet, daß die Elektrikplatte (2) mit einem Elektronikcontroller (7) für Busbetrieb zum steuern von Zusatzfunktionen ausgestattet ist.

3. Lenkstockschalter nach Anspruch 1 oder 2, dadurch gekennzeichnet, daß in den Aufnahmekörper (1) ein Lenkwinkelsensor (6) integriert ist.

4. Lenkstockschalter nach Anspruch 1, 2 oder 3, dadurch gekennzeichnet, daß am Aufnahmekörper (1) eine Befestigungseinheit (5) als separate Baugruppe befestigt oder in diesen integriert ist.

## Claims

1. Modular steering column mounted switch for a motor vehicle, having at least two modules (2, 3, 4) characterized in that
- the at least one module (3, 4) is constructed as an operation module, in which internal mechanical functions of the steering column such as, e.g., reception of external signals, signal transfer and the internal switching of electrical switching contacts are combined, and
- the other module (2) is constructed a electrical board, at which the internal electrical functions such as current switching, current distribution and current control are combined, wherein the electrical board (2) and the operation module (3, 4) are mounted at or integrated as separate subassemblies in a receptacle (1).

2. The steering column mounted switch of Claim 1, characterized in that an electrical board (2) is equipped with an electronic controller (7) for bus operation to control miscellaneous functions.

3. The steering column mounted switch of Claims 1 or 2, characterized in that a steering angle sensor (6) is integrated in the receptacle (1).

4. The steering column mounted switch of Claims 1, 2 or 3, characterized in that a mounting unit (5) is mounted to or integrated in the receptacle (1) as a separate subassembly.

## Revendications

1. Commutateur de colonne de direction à structure modulaire pour véhicules à moteur, comprenant au moins deux modules (2, 3, 4), caractérisé en ce que :
- au moins un module (3, 4) se présente sous la forme d'un module de commande, dans lequel les fonctions mécaniques internes du commutateur de colonne de direction, par exemple la réception des signaux externes, le transfert des signaux et la commutation mécanique interne des contacts de commutation électriques sont regroupés, et
- l'autre module (2) se présente sous la forme d'une plaque électrique, dans laquelle les fonctions électriques internes, telles que la commutation du courant, la distribution du courant et l'acheminement du courant, sont regroupées,
la plaque électrique (2) et les modules de commande (3, 4) sont fixés sous la forme de blocs séparés sur un corps récepteur (1) ou intégrés dans celui-ci.

2. Commutateur de colonne de direction selon la revendication 1, caractérisé en ce que la plaque électrique (2) est équipée d'un dispositif de commande électronique (7) pour une exploitation de bus afin de commander des fonctions d'appoint.

3. Commutateur de colonne de direction selon la revendication 1 ou 2, caractérisé en ce qu'un capteur d'angle de direction (6) est intégré dans le corps récepteur (1).

4. Commutateur de colonne de direction selon la revendication 1, 2 ou 3, caractérisé en ce qu'une unité de fixation (5) est fixée au corps récepteur (1) sous la forme d'un bloc séparé ou est intégrée dans celui-ci.
